# EUROPÄISCHE PATENTSCHRIFT

(11) **EP 2 377 748 B1**
(45) Veröffentlichungstag und Bekanntmachung des Hinweises auf die Patenterteilung: **15.03.2017**
(21) Anmeldenummer: 11003119.2
(22) Anmeldetag: 13.04.2011
(51) Int. Cl.: B62D 25/24

(54) **Dichtstopfen**
Plug
Bouchon

(30) Priorität: 19.04.2010 DE 202010005749 U
(43) Veröffentlichungstag der Anmeldung: 19.10.2011
(73) Patentinhaber: ITW Fastener Products GmbH, 58642 Iserlohn (DE)
(72) Erfinder: Hofmann, Jürgen, 67304 Eisenberg (DE); Leidner, Vitali, 67677 Enekenbach-Alsenborn (DE)
(74) Vertreter: Hauck Patentanwaltspartnerschaft mbB

(56) Entgegenhaltungen:
- EP-A1- 0 631 923
- EP-A1- 1 375 308
- WO-A1-02/090171
- WO-A1-2004/085231
- WO-A1-2007/093862
- DE-A1- 19 546 160

## Beschreibung

Die Erfindung betrifft einen Dichtstopfen zum Verschließen von Löchern, insbesondere in Fahrzeugkarosserien.

Dichtstopfen werden in verschiedenen Ausführungsformen im Automobilbereich eingesetzt und dienen dazu, Öffnungen in Fahrzeugbauteilen dichtend zu verschließen. Die Dichtkörper haben beispielsweise einen Grundkörper aus einem relativ harten Kunststoff, der einen Stützkörper bildet bzw. dem Dichtstopfen Stabilität verleiht, sowie einen Dichtkörper aus einem relativ weichen Kunststoff, der am Bauteil anliegt und die Öffnung verschließt. Um die Öffnung besonders dicht zu verschließen, sind aus dem Stand der Technik Dichtstopfen bekannt, die an beiden Seiten der Öffnung einen Dichtring aufweisen, der jeweils am Bauteil anliegt, so dass die Öffnung beidseitig abgedichtet ist. Ein solcher Dichtstopfen ist beispielsweise aus der WO 2007/093862 A1 bekannt. Der in dieser Schrift gezeigte Dichtstopfen hat einen Grundkörper aus zwei Einzelteilen, die an einem Verbindungsbereich miteinander verbunden sind. An jedem der Einzelteile ist eine Dichtung vorgesehen, wobei jeweils eine Dichtung auf der Vorderseite und eine Dichtung auf der Rückseite des Bauteils anliegt. Ein solcher Dichtkörper ist allerdings sehr aufwendig in der Herstellung, da auf beiden Seiten der Öffnung Dichtbereiche am Dichtstopfen angebracht werden müssen.

Aus der EP 0 631 923 A1 ist ein Verschlussdeckel bekannt, der einen Grundkörper aufweist, der mit einem Dichtungsmaterial beschichtet ist. Das Dichtungsmaterial erstreckt sich dabei auf voneinander abgewandte Seiten des Grundkörpers.

Aus der DE 195 46 160 A1 ist ein Verschlussdeckel bekannt, der einen tellerförmigen Grundkörper mit einem umlaufenden, hochgezogenen Rand aufweist. Der Grundkörper ist auf seiner Unterseite mit einem Dichtungsmaterial versehen, das sich bis auf den hochgezogenen Rand erstreckt.

Die WO 2004/085231 offenbart einen Dichtstopfen nach dem Oberbegriff des unabhängigen Anspruchs 1.

Aufgabe der Erfindung ist es, einen Dichtstopfen bereitzustellen, der eine Öffnung beidseitig abdichten kann und bei einfacher Herstellung eine größere Stabilität bietet.

Zur Lösung der Aufgabe ist ein Dichtstopfen zum Verschließen von Löchern, insbesondere in Fahrzeugkarosserien, vorgesehen, mit einem Grundkörper, der aus einem ersten Kunststoffmaterial besteht, und einem Dichtkörper, der an dem Grundkörper angebracht ist, wobei der Dichtkörper zwei Dichtringe aufweist, die einander gegenüberliegend angeordnet sind, sodass diese auf der einen und der anderen Seite eines Karosserieteils anliegen können. Der Dichtkörper weist einen Angussbereich und mehrere Verbindungsbereiche auf, mittels denen die beiden Dichtringe miteinander verbunden sind. Zwischen dem Angussbereich und einem der beiden Dichtringe erstrecken sich mehrere Verbindungsstege. Die Position der Dichtringe zueinander ist durch die Verbindungsbereiche fixiert, wodurch diese in montiertem Zustand an einem Karosserieteil nicht auseinandergedrückt werden können. Dadurch ist sichergestellt, dass beide Dichtringe am Karosserieteil anliegen und die Öffnung im Karosserieteil zuverlässig abdichten können. Durch die Verbindungsbereiche sind die beiden Dichtringe so miteinander verbunden, dass diese in einem Arbeitsgang gleichzeitig über den gemeinsamen Angussbereich gespritzt werden können, wodurch die Herstellungskosten reduziert werden können. Da der Angussbereich von den Dichtringen getrennt ist, können an diesen keine durch den Angussbereich verursachten Unebenheiten entstehen. Zudem dienen die Verbindungsstege der Stabilisierung des Dichtkörpers und ermöglichen eine bessere Verbindung zwischen Grundkörper und Dichtkörper.

Die Verbindungsstege erstrecken sich beispielsweise radial ausgehend von einem Zentrum, in dem der Angussbereich angeordnet sein kann, so dass ein gleichmäßiges Füllen einer Spritzgussform möglich ist.

Vorzugsweise ist vorgesehen, dass auf der Rückseite eines der Dichtringe mehrere Federabschnitte ausgebildet sind, die über die benachbarten Flächen des Grundkörpers hervorstehen. Dies gewährleistet, dass bei der Montage des Dichtstopfens am Karosserieteil zuerst der Dichtkörper mit dem Karosserieteil in Kontakt kommt, was die Montage erleichtert und das Risiko einer Beschädigung des entsprechenden Dichtrings beim Einschnappen in die Öffnung verringert.

Vorzugsweise erstrecken sich die Federabschnitte in Verlängerung der Verbindungsstege. Die Federabschnitte können also einteilig mit den Verbindungsstegen ausgeführt werden, so dass sich kein zusätzlicher Aufwand bei der Herstellung ergibt.

Um die Verbindung zwischen Grundkörper und Dichtkörper zu verbessern, weist der Angussbereich beispielsweise eine mittige Öffnung auf, in die ein Zapfen des Grundkörpers eingreift. Neben der stoffschlüssigen Verbindung zwischen Grundkörper und Dichtkörper ist dadurch auch eine formschlüssige Verbindung zwischen den Bauteilen geschaffen, die eine besonders sichere Verbindung der Bauteile ermöglicht.

Der Dichtkörper kann beispielsweise aus einem wärmeschmelzenden Kunststoff bestehen, sodass durch ein Erhitzen des Fahrzeugbauteils eine stoffschlüssige Verbindung zwischen Dichtstopfen und Fahrzeugbauteil hergestellt werden kann, wodurch die Öffnung im Fahrzeugbauteil zuverlässig abgedichtet ist. Zudem können durch den schmelzenden Dichtkörper Unebenheiten des Fahrzeugbauteils ausgeglichen werden.

Vorzugsweise besteht der Grundkörper aus einem Kunststoffmaterial, das bei der Schmelztemperatur des Dichtkörpers seine Festigkeit behält, sodass der Dichtstopfen durch den Grundkörper auch während des Schmelzvorgangs sicher in der Öffnung gehalten ist.

Weitere Vorteile und Merkmale ergeben sich aus der nachfolgenden Beschreibung in Verbindung mit den beigefügten Zeichnungen. In diesen zeigen:
- Figur 1 eine perspektivische Ansicht eines erfindungsgemäßen Dichtstopfens,
- Figur 2 eine zweite perspektivische Ansicht des Dichtstopfens aus Figur 1,
- Figur 3 eine dritte perspektivische Ansicht des Dichtstopfens aus Figur 1
- Figur 4 eine perspektivische Ansicht des Dichtkörpers eines erfindungsgemäßen Dichtstopfens,
- Figur 5 eine zweite perspektivische Ansicht des Dichtkörpers aus Figur 4,
- Figur 6 eine dritte perspektivische Ansicht des Dichtkörpers aus Figur 4,
- Figur 7 eine perspektivische Ansicht des Grundkörpers eines erfindungsgemäßen Dichtstopfens,
- Figur 8 eine zweite perspektivische Ansicht des Grundkörpers aus Figur 7,
- Figur 9 eine dritte perspektivische Ansicht des Grundkörpers aus Figur 7,
- Figur 10 eine erste Schnittansicht durch den Dichtstopfen aus Figur 1, und
- Figur 11 eine zweite Schnittansicht durch den Dichtstopfen aus Figur 1.

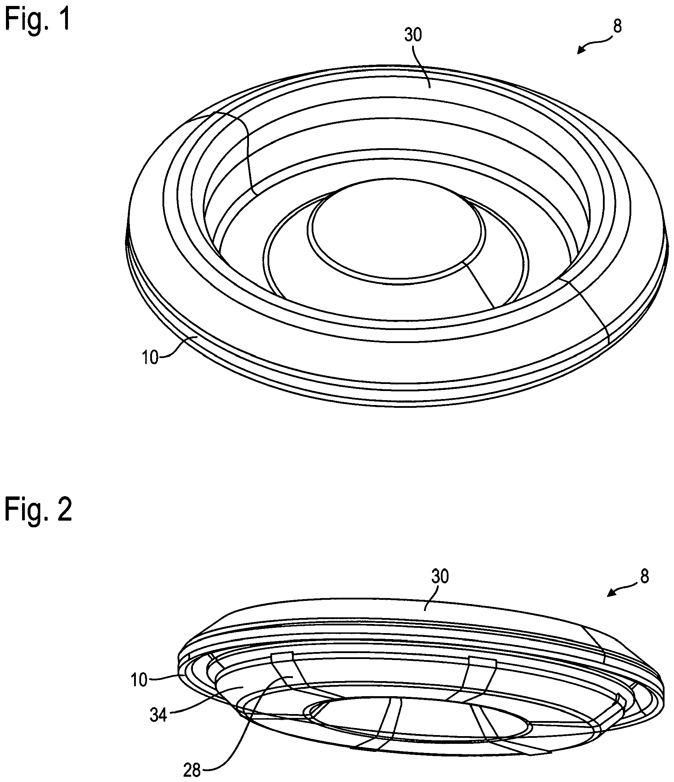

Der in den Figuren 1 bis 3 dargestellte Dichtstopfen 8 dient zum Abdichten von Öffnungen, beispielsweise in Fahrzeugkarosserien. Der Dichtstopfen 8 hat einen Dichtkörper 10 aus einem relativ flexiblen Kunststoffmaterial sowie einen Grundkörper 30 aus einem Kunststoffmaterial, das eine größere Härte aufweist als das Material des Dichtkörpers 10. Der Grundkörper 30 hat hier eine im Wesentlichen schüsselartige Bauform, so dass dieser die Öffnung im Karosseriebauteil abdecken und den Dichtkörper 10 stützen kann. Der Dichtkörper 10 weist eine im Wesentlichen ringförmige Struktur auf und ist mit dem Grundkörper 30 stoffschlüssig verbunden.

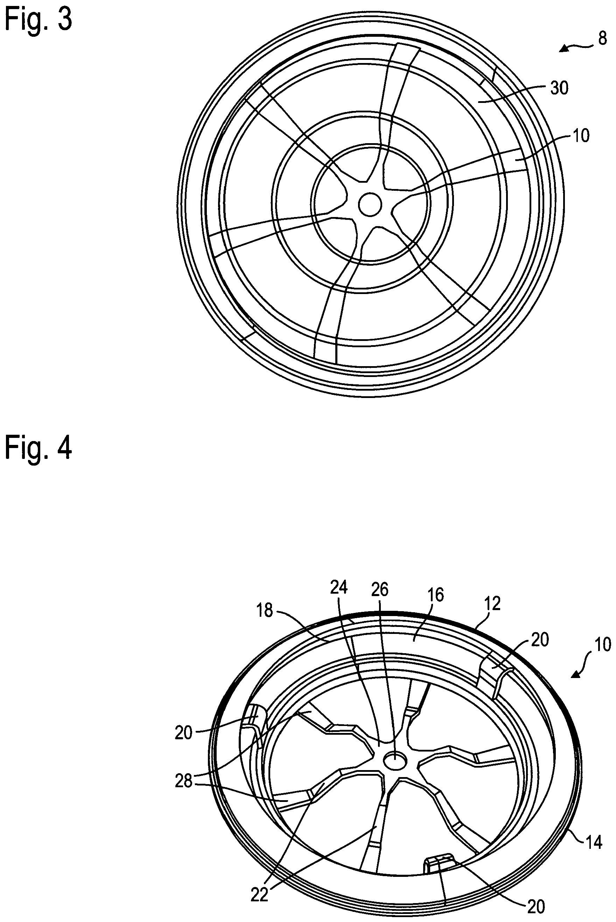

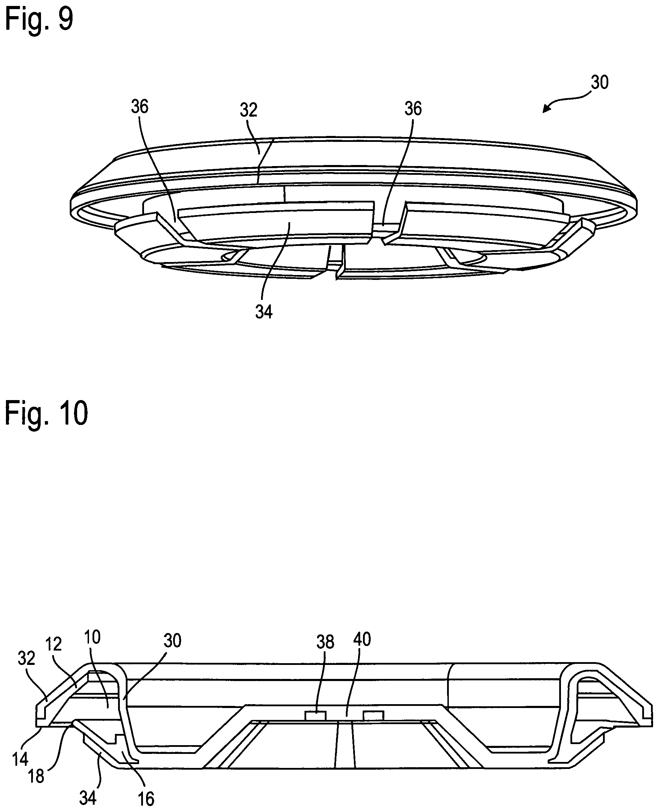

Der in den Figuren 4 bis 6 dargestellte Dichtkörper 10 des Dichtstopfens 8 enthält einen ersten Dichtring 12 mit einer Dichtlippe 14 und einen zweiten Dichtring 16 mit einer Dichtlippe 18. Die Dichtlippen 14, 18 verlaufen im Wesentlichen auf parallelen Ebenen und sind einander zugewandt, so dass diese bei einer Montage des Dichtkörpers 10 in der Öffnung eines Karosserieteils auf beiden Seiten der Öffnung dichtend am Karosseriebauteil anliegen können. Das Karosserieteil ist in Figur 10 schematisch angedeutet (Bezugszeichen 5). Der Dichtkörper 10 weist mehrere Verbindungsbereiche 20 auf, die die beiden Dichtringe 12, 16 miteinander verbinden und die hier in radialer Richtung auf der Innenseite der Dichtringe angeordnet sind.

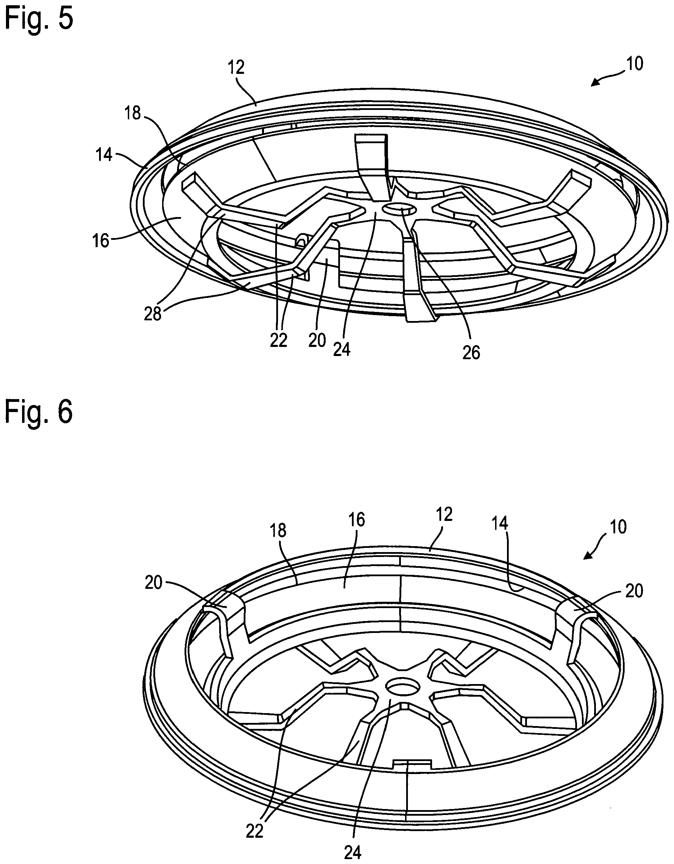

Der Dichtkörper 10 weist in seinem Zentrum einen Angussbereich 24 auf, der über mehrere, hier sternförmig zum zweiten Dichtring 16 verlaufende Verbindungsstege 22 mit dem zweiten Dichtring 16 verbunden ist. Der Angussbereich 24 weist eine mittige Öffnung 26 auf. Wie insbesondere in Figur 5 zu sehen ist, sind die Verbindungsstege 22 mit Federabschnitten 28 versehen, die sich in Verlängerung der Verbindungsstege 22 erstrecken. Die Federabschnitte 28 sind hier auf der "Rückseite" des zweiten, kleineren Dichtrings 16 vorgesehen, also auf der Seite, die vom größeren Dichtring 12 abgewandt ist und beim Einsetzen des Dichtstopfens in die Öffnung der Karosserie mit dem Rand des Karosserieteils in Kontakt kommt. Der Dichtkörper 12 ist einstückig aus einem relativ weichen Kunststoff spritzgegossen, der unter Wärmeeinwirkung schmelzen kann. Alternativ ist möglich, ihn aus einem anderen geeigneten, flexiblen Material herzustellen.

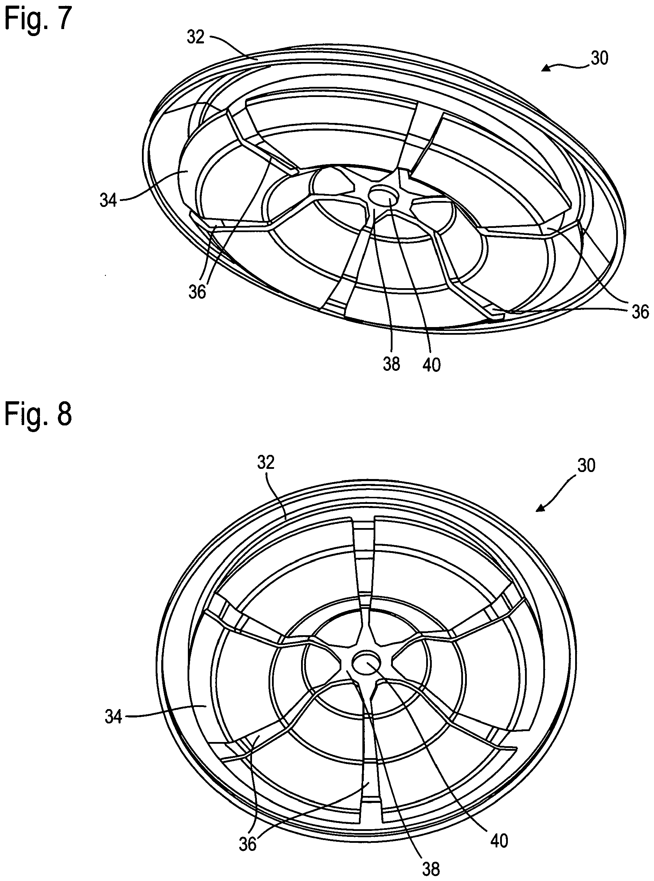

Der in den Figuren 7 bis 9 dargestellte Grundkörper 30 weist an seinem radialen Rand zwei gegenüberliegende, kegelstumpfartig ausgebildete Stützflächen 32 und 34 auf, die die Dichtringe 12, 16 aufnehmen und diese stützen. Die untere Stützfläche 34 weist mehrere Aussparungen 36, 38 auf, die die Verbindungsstege 22 sowie den Angussbereich 24 des Dichtkörpers 10 aufnehmen. Die im Zentrum des Dichtkörpers 10 angeordneten Aussparung 38 ist mit einem Zapfen 40 versehen.

Zur Herstellung des Dichtstopfens 8 wird in einem ersten Verfahrensschritt der Dichtkörper 10 aus einem relativ weichen Kunststoff durch Spritzgiessen hergestellt. In einem zweiten Verfahrensschritt wird der Grundkörper 30 aus einem stabileren Kunststoff hergestellt und mit dem Dichtkörper verbunden. Vorzugsweise wird der Grundkörper 30 in einem zweiten Spritzvorgang direkt an den Dichtkörper 10 angespritzt, so dass das Material des Dichtkörpers, aufgrund seines niedrigeren Schmelzpunktes, leicht erweicht und die harte Komponente des Grundkörpers mit der weichen Komponente des Dichtkörpers verklebt.

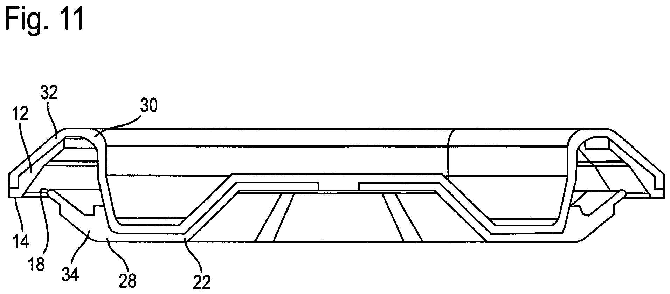

Wie in den Figuren 10 und 11 zu sehen ist, liegen die Dichtringe 12, 16 des Dichtkörpers 10 auf der Innenseite der Stützflächen 32, 34 an diesen an und werden so von den Stützflächen 32, 34 gestützt. Die Verbindungsstege 22 liegen in den Aussparungen 36 an und bilden so eine stabile Verbindung zwischen Grundkörper 30 und Dichtkörper 10. Der Angussbereich 24 liegt in der mittigen Aussparung 38, sodass der Zapfen 40 des Grundkörpers 30 in die Öffnung 26 des Angussbereichs 24 eingreift und zusätzlich eine formschlüssige Verbindung zwischen Dichtkörper 10 und Grundkörper 30 herstellt.

Wie auch insbesondere in Figur 2 zu sehen ist, stehen die am zweiten Dichtring 16 vorgesehenen Federelemente 28 des Dichtkörpers 10 in radialer Richtung über die jeweils benachbarten Bereiche des Grundkörpers 30 vor. Bei der Montage des Dichtstopfens 8 kann so der Dichtring 12 flexibel nachgeben, so dass die Montage des Dichtstopfens erleichtert wird.

Wie in den Figuren 10 und 11 zu sehen ist, stehen die Dichtlippen 14, 18 der Dichtringe 12, 16 jeweils in Richtung zur andere Dichtlippe 14, 18 über den Grundkörper 30 vor, so dass der Dichtstopfen 8 in eingebautem Zustand nur mit dem Dichtkörper 10 mit dem Karosseriebauteil in Anlage gelangt. Die Stützflächen 32, 34 unterstützen zwar die Dichtringe 12, 16 und halten diese an die Flächen des Karosseriebauteils gedrückt, so dass ein zuverlässiger Halt des Dichtstopfens 8 in der Öffnung gewährleistet ist, diese haben aber keinen Kontakt zu einem Fahrzeugbauteil an. Eine Geräuschbildung, beispielsweise durch Vibrationen, ist so sicher ausgeschlossen.

Der Dichtkörper 10 kann beispielsweise zumindest teilweise aus einem wärmeschmelzenden Kunststoff hergestellt sein, so dass bei einer Erwärmung des Dichtstopfens zum einen eine stoffschlüssige Verbindung zwischen Karosseriebauteil und Dichtstopfen 8 hergestellt ist. Zum anderen ist dadurch ein Ausgleich von Unebenheiten möglich. Der Grundkörper 30 ist aus einem Kunststoffmaterial hergestellt, das bei der Schmelztemperatur des Dichtstopfens 8 seine Festigkeit behält, so dass auch während des Schmelzvorganges ein sicherer Halt des Dichtstopfens 8 am Karosseriebauteil gewährleistet ist.

## Patentansprüche

1. Dichtstopfen (8) zum Verschließen von Löchern, insbesondere in Fahrzeugkarosserien, mit einem Grundkörper (30), der aus einem ersten Kunststoffmaterial besteht, und einem Dichtkörper (10), der an dem Grundkörper (30) angebracht ist, wobei der Dichtkörper (10) zwei Dichtringe (12, 16) aufweist, die einander gegenüberliegend angeordnet sind, sodass diese auf der einen und der anderen Seite eines Karosserieteils anliegen können, wobei der Dichtkörper (10) einen Angussbereich (24) und mehrere Verbindungsbereiche (20) aufweist, mittels denen die beiden Dichtringe (12, 16) miteinander verbunden sind, **dadurch gekennzeichnet, dass** sich zwischen dem Angussbereich (24) und einem der beiden Dichtringe (12, 16) mehrere Verbindungsstege (22) erstrecken.

2. Dichtstopfen nach Anspruch 1, **dadurch gekennzeichnet, dass** die Verbindungsstege (22) sich radial ausgehend von einem Zentrum erstrecken.

3. Dichtstopfen nach einem der vorhergehenden Ansprüche, **dadurch gekennzeichnet, dass** auf der Rückseite eines der Dichtringe (12, 16) mehrere Federabschnitte (28) ausgebildet sind, die über die benachbarten Flächen des Grundkörpers (30) hervorstehen.

4. Dichtstopfen nach Anspruch 3, **dadurch gekennzeichnet, dass** die Federabschnitte (28) sich in Verlängerung der Verbindungsstege (22) erstrecken.

5. Dichtstopfen nach einem der vorhergehenden Ansprüche, **dadurch gekennzeichnet, dass** der Angussbereich (24) des Dichtkörpers (10) mit einer mittigen Öffnung (26) versehen ist, in der ein Zapfen (40) des Grundkörpers (30) eingreift.

6. Dichtstopfen nach einem der vorhergehenden Ansprüche, **dadurch gekennzeichnet, dass** der Dichtkörper (10) aus einem wärmeschmelzenden Klebstoff besteht.

7. Dichtstopfen nach einem der vorhergehenden Ansprüche, **dadurch gekennzeichnet, dass** der Grundkörper (30) aus einem Kunststoffmaterial besteht, das bei der Schmelztemperatur des Dichtkörpers (10) seine Festigkeit behält.

## Claims

1. Plug (8) for closing holes, in particular in vehicle bodies, with a basic body (30) which is composed of a first plastics material, and a sealing body (10) which is attached to the basic body (30), wherein the sealing body (10) has two sealing rings (12, 16) which are arranged opposite each other, and therefore said sealing rings can lie against the one and the other side of a bodywork part, wherein the sealing body (10) has a sprue region (24) and a plurality of connecting regions (20) by means of which the two sealing rings (12, 16) are connected to each other, **characterized in that** a plurality of connecting webs (22) extend between the sprue region (24) and one of the two sealing rings (12, 16).

2. Plug according to Claim 1, **characterized in that** the connecting webs (22) extend radially from a centre.

3. Plug according to either of the preceding claims, **characterized in that** a plurality of spring sections (28) which protrude over the adjacent surfaces of the basic body (30) are formed on the rear side of one of the sealing rings (12, 16).

4. Plug according to Claim 3, **characterized in that** the spring sections (28) extend in a continuation of the connecting webs (22).

5. Plug according to one of the preceding claims, **characterized in that** the sprue region (24) of the sealing body (10) is provided with a central opening (26) in which a pin (40) of the basic body (30) engages.

6. Plug according to one of the preceding claims, **characterized in that** the sealing body (10) is composed of a hot-melt adhesive.

7. Plug according to one of the preceding claims, **characterized in that** the basic body (30) is composed of a plastics material which retains its strength at the melting point of the sealing body (10).

## Revendications

1. Bouchon (8) pour boucher des trous, en particulier dans des carrosseries de véhicule, comprenant un corps de base (30) qui se compose d'un premier matériau en plastique, et un corps d'étanchéité (10) qui est monté sur le corps de base (30), le corps d'étanchéité (10) présentant deux bagues d'étanchéité (12, 16) qui sont disposées en regard l'une de l'autre de telle sorte que celles-ci puissent s'appliquer sur l'un et l'autre côté d'une pièce de carrosserie, le corps d'étanchéité (10) présentant une région de carotte (24) et plusieurs régions de connexion (20) au moyen desquelles les deux bagues d'étanchéité (12, 16) sont connectées l'une à l'autre,
**caractérisé en ce que**
plusieurs nervures de connexion (22) s'étendent entre la région de carotte (24) et l'une des deux bagues d'étanchéité (12, 16).

2. Bouchon selon la revendication 1, **caractérisé en ce que** les nervures de connexion (22) s'étendent radialement à partir d'un centre.

3. Bouchon selon l'une quelconque des revendications précédentes, **caractérisé en ce que** plusieurs portions de ressort (28) sont réalisées sur le côté arrière de l'une des bagues d'étanchéité (12, 16), lesquelles font saillie au-delà des surfaces adjacentes du corps de base (30).

4. Bouchon selon la revendication 3, **caractérisé en ce que** les portions de ressort (28) s'étendent dans le prolongement des nervures de connexion (22).

5. Bouchon selon l'une quelconque des revendications précédentes, **caractérisé en ce que** la région de carotte (24) du corps d'étanchéité (10) est pourvue d'une ouverture centrale (26) dans laquelle s'engage un tourillon (40) du corps de base (30).

6. Bouchon selon l'une quelconque des revendications précédentes, **caractérisé en ce que** le corps de base (10) se compose d'un adhésif thermofusible.

7. Bouchon selon l'une quelconque des revendications précédentes, **caractérisé en ce que** le corps de base (30) se compose d'un matériau en plastique qui conserve sa solidité à la température de fusion du corps d'étanchéité (10).
